# FASCICULE DE BREVET EUROPEEN

(11) **EP 3 424 777 B1**
(45) Date de publication et mention de la délivrance du brevet: **20.12.2023**
(21) Numéro de dépôt: 18179793.7
(22) Date de dépôt: 26.06.2018
(51) Int. Cl.: B60Q 1/00, B60Q 1/50, B60Q 1/26, F21S 43/27, F21S 43/20

(54) **DISPOSITIF D'ÉCLAIRAGE ET/OU DE SIGNALISATION LUMINEUSE COMPRENANT UN SYSTÈME D'AFFICHAGE ESCAMOTABLE ET VÉHICULE**
BELEUCHTUNGS- UND/ODER SIGNALISIERUNGSVORRICHTUNG, DIE EIN VERSENKBARES ANZEIGESYSTEM UMFASST UND KRAFTFAHRZEUG
LIGHTING AND/OR LIGHT SIGNALLING DEVICE COMPRISING A RETRACTABLE DISPLAY SYSTEM AND VEHICLE

(30) Priorité: 03.07.2017 FR 1756245
(43) Date de publication de la demande: 09.01.2019
(73) Titulaire: Stellantis Auto SAS, 78300 Poissy (FR)
(72) Inventeur: LE DALL, Christophe, 92150 Suresnes (FR); GONCALVES, Whilk Marcelino, 75013 Paris (FR)

(56) Documents cités:
- EP-A1- 2 503 222
- EP-A2- 1 962 012
- CN-A- 105 805 670
- CN-U- 205 535 482
- DE-A1-102015 220 543
- FR-A1- 3 034 728
- JP-A- 2015 099 638

## Description

L'invention concerne, de façon générale, les dispositifs d'éclairage et/ou de signalisation lumineuse, destinés plus particulièrement aux véhicules automobiles. L'invention porte plus précisément sur un système d'affichage escamotable intégré à un dispositif d'éclairage et/ou de signalisation lumineuse.

De manière connue, des dispositifs d'éclairage et/ou de signalisation lumineuse sont disposés à l'avant et à l'arrière d'un véhicule automobile afin, d'une part, d'éclairer la route pour améliorer la visibilité du conducteur du véhicule, notamment en condition nocturne, et, d'autre part, de signaler la position du véhicule aux autres usagers de la route.

En pratique, un dispositif d'éclairage et/ou de signalisation lumineuse arrière comprend principalement les feux de position, les feux indiquant l'arrêt du véhicule, communément désignés « feux de stop », et les feux de recul, permettant d'alerter les usagers de la route de la volonté du conducteur d'effectuer une marche arrière. Pour ce faire, un dispositif d'éclairage et/ou de signalisation lumineuse arrière comprend une pluralité de sources lumineuses pouvant être actionnées afin d'activer les différents feux. Par souci de concision, le terme « dispositif d'éclairage » sera utilisé par la suite pour désigner aussi bien des dispositifs d'éclairage et des dispositifs de signalisation lumineuse.

De manière classique, les différentes sources lumineuses se présentent sous la forme d'une pluralité d'ampoules ou de diodes électroluminescentes, montées à l'intérieur d'un boîtier fermé de manière étanche par une paroi transparente, également désignée sous le terme de « glace », afin de permettre à la lumière émise par les sources lumineuses d'être orientée vers l'extérieur du véhicule et d'être ainsi visibles par les autres usagers.

De nos jours, de nombreux dispositifs d'éclairage comprennent également des guides de lumière plats intégrés à l'intérieur du boîtier et aptes à diffuser la lumière émise par l'une des sources lumineuses. De tels guides de lumière sont par exemple insérés à l'intérieur d'ouvertures ou d'encoches, dont le positionnement permet de conférer une signature lumineuse caractéristique à un véhicule. L'utilisation de guides de lumière permet également d'apporter un design spécifique aux dispositifs d'éclairage.

Il est connu également d'intégrer aux dispositifs d'éclairage arrières un écran permettant la projection d'images ou de pictogrammes. A titre d'exemple, lors de l'activation de la pédale de frein par le conducteur, générant l'allumage des feux de stop, l'écran peut afficher un pictogramme d'alerte permettant de renforcer la signalisation d'une telle manoeuvre auprès des autres usagers ou des piétons par exemple.

Selon l'état de la technique, un tel écran permet une réflexion diffuse orthotrope de la lumière. A ce titre, un tel écran, communément désigné « écran lambertien », est généralement translucide, ce qui peut masquer en partie les guides de lumière disposés à l'arrière du boîtier. Aussi, lorsque l'activation d'un tel écran n'est pas nécessaire, par exemple lorsque le véhicule est éteint, l'écran positionné devant les guides de lumière, masque le design et le style du dispositif d'éclairage, ce qui est inesthétique.

Selon l'état de la technique, les dispositifs d'éclairage de certains véhicules sont équipés d'un écran de diffusion mobile permettant de réfléchir la lumière provenant de la source lumineuse. A ce titre, le document FR 3016148 décrit un écran de diffusion configuré pour pivoter entre une position d'éclairage, dans laquelle l'écran présente en vis-à-vis de la glace du dispositif d'éclairage une surface de diffusion assurant le passage de la lumière, et une position inactive, dans laquelle l'écran positionne en vis-à-vis de la glace une surface revêtue d'un matériau ornemental, rendant la surface opaque. Cependant un tel écran, non destiné à assurer la projection d'images ou de pictogrammes, n'est pas un diffuseur lambertien et présente l'inconvénient d'être positionné devant la glace quelle que soit son orientation, réduisant la visibilité des guides de lumière.

Il est connu également du document DE102015220543A1, un dispositif d'éclairage conforme au préambule de la revendication 1. Il est connu également de CN105805670A et CN205535482U un système d'éclairage pour automobile comprenant un module d'affichage à l'extérieur du système d'éclairage.

Toutefois, ce dispositif ne permet pas l'utilisation par le module d'affichage de toute la surface d'éclairage ou de signalisation du dispositif sans masquer les éléments de design contenus dans le dispositif d'éclairage et/ou de signalisation.

L'invention vise donc à pallier au moins en partie ces inconvénients en proposant un dispositif d'éclairage et/ou de signalisation lumineuse pour véhicule, conforme à la partie caractérisante de la revendication 1

Un tel système d'affichage permet avantageusement d'escamoter le module d'affichage, de manière à ce que celui-ci ne se trouve pas systématiquement devant les sources lumineuses du dispositif d'éclairage et/ou de signalisation lumineuse.

De manière avantageuse, le module de motorisation comprend un électroaimant, permettant aisément d'entrainer en rotation le module d'affichage.

Avantageusement, le module d'affichage comprenant une première bordure, ledit axe de rotation est aménagé de façon à correspondre à ladite première bordure, de manière à escamoter ledit module d'affichage en position rétractée.

Selon l'invention, le système d'affichage présente un état actif et un état inactif,
le module de motorisation est configuré pour placer le module d'affichage en position déployée lorsque le système d'affichage est dans ledit état actif, permettant l'affichage d'un pictogramme ou d'une image par exemple lorsque le véhicule est allumé.

Selon l'invention, le système d'affichage présente un état actif et un état
inactif, le module de motorisation est configuré pour placer le module d'affichage en position rétractée lorsque le système d'affichage est dans ledit état inactif, permettant de ne pas masquer le design du dispositif d'éclairage et/ou de signalisation lumineuse.

De manière préférée, le véhicule comprenant un module de commande et présentant une configuration allumée et une configuration éteinte et/ou endormie, ledit module de commande est configuré pour placer le système d'affichage dans ledit état actif, de manière à placer le module d'affichage en position déployée, uniquement lorsque le véhicule est dans ladite configuration allumée.

Selon une forme de réalisation préférée, le véhicule comprenant un module de commande et présentant une configuration allumée et une configuration éteinte et/ou endormie, le module de commande est configuré pour placer le système d'affichage dans ledit état inactif, de manière à placer le module d'affichage en position rétractée, uniquement lorsque le véhicule est dans ladite configuration éteinte et/ou endormie.

Avantageusement, le module d'affichage permet d'afficher au moins un pictogramme et/ou au moins une image et/ou au moins une vidéo.

De manière préférée, le dispositif comprend un module de projection, configuré pour projeter ledit au moins un pictogramme et/ou ladite au moins une image et/ou ladite au moins une vidéo sur le module d'affichage, uniquement lorsque ledit module d'affichage est en position déployée.

L'invention porte également sur un véhicule automobile comprenant un dispositif d'éclairage et/ou de signalisation lumineuse tel que décrit précédemment.

D'autres caractéristiques et avantages de l'invention apparaîtront à la lecture de la description détaillée des formes de réalisation de l'invention, données à titre d'exemple uniquement, et en référence aux dessins qui montrent :
- la figure 1, une représentation schématique d'un véhicule et d'un exemple de repère de définition d'un tel véhicule,
- la figure 2, une représentation schématique d'un dispositif d'éclairage et/ou de signalisation lumineuse comprenant un système d'affichage selon une forme de réalisation de l'invention, et
- la figure 3, une représentation schématique du fonctionnement d'un système d'affichage selon une forme de réalisation de l'invention.

Dans ce qui va suivre, les formes de réalisation décrites s'attachent plus particulièrement à une installation du dispositif selon l'invention au sein d'un véhicule automobile. Cependant, toute installation dans un contexte différent, en particulier dans tout type de véhicule, est également visée par la présente invention.

Selon une forme de réalisation préférée de l'invention, un véhicule 1 automobile comprend une pluralité de dispositifs d'éclairage et/ou de signalisation lumineuse arrière, désignés par la suite dispositifs d'éclairage 10.

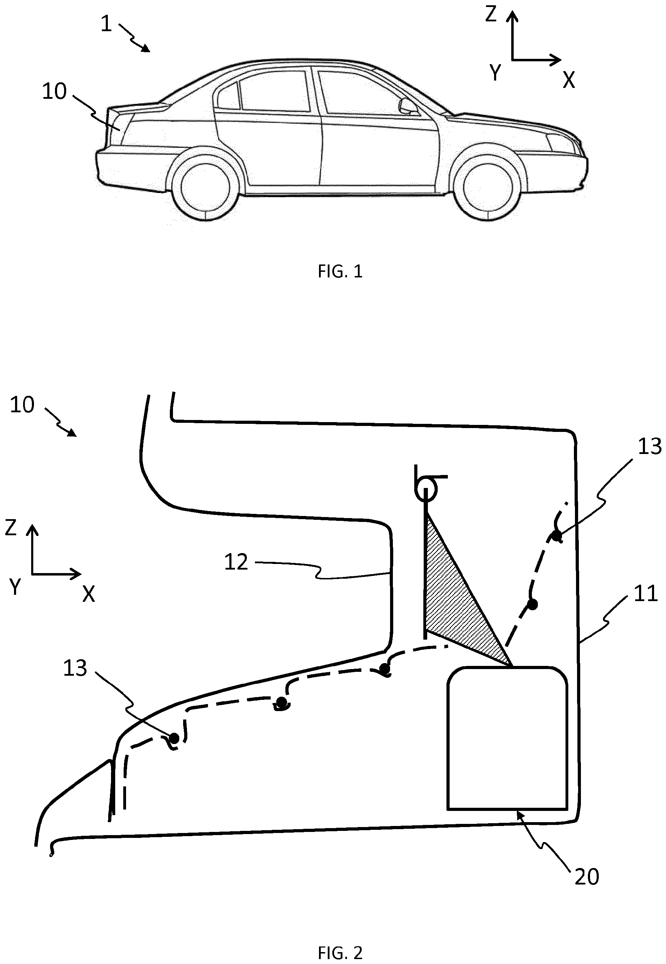

En référence à la figure 1, le véhicule 1 automobile s'étend longitudinalement selon un axe X, latéralement selon un axe Y et verticalement selon un axe Z, de manière à former un repère orthogonal (X, Y, Z). Ainsi par le terme horizontal, on entend un objet s'étendant dans le plan (X, Y). De manière similaire, le terme vertical désigne un objet s'étendant dans le plan (Y, Z).

Comme représenté sur la figure 2, le dispositif d'éclairage 10 comprend une pluralité de guides de lumière 13, intégrés à l'intérieur d'un boîtier 11 fermé par une paroi, désignée « glace » 12. Une telle glace 12 transparente permet à la lumière émise par les guides de lumière 13 d'être visible depuis l'extérieur du véhicule 1. Le dispositif d'éclairage 10 comprend en outre un système d'affichage 20 selon une forme de réalisation préférée de l'invention. Un tel système d'affichage 20 est configuré pour permettre la diffusion d'une image, d'un pictogramme ou d'une vidéo par exemple.

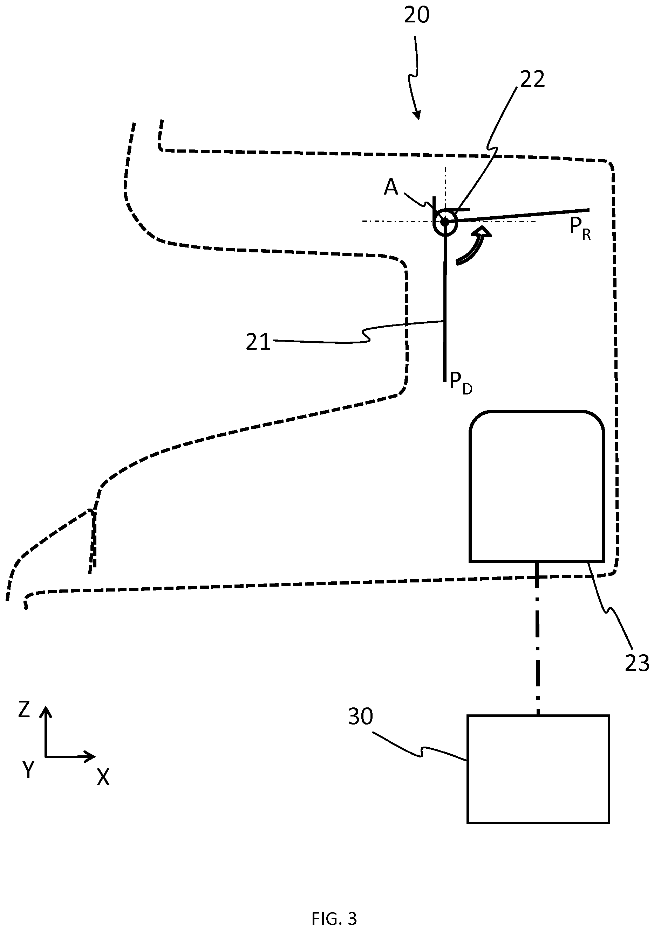

A cette fin, en référence à la figure 3, le système d'affichage 20 comprend un module d'affichage 21, un module de motorisation 22 et un module de projection 23.

Le module d'affichage 21 est de préférence un écran d'affichage, configuré pour permettre une diffusion de la lumière de manière orthotrope, offrant ainsi une image visible sous un angle d'ouverture horizontal de 180°, à la manière d'un écran de cinéma. Un tel écran, désigné écran diffuseur lambertien, est connu en soi et ne sera pas décrit plus en détails dans ce document.

Selon une forme de réalisation préférée de l'invention, un tel module d'affichage 21 est configuré pour évoluer entre une position déployée P_{D} et une position rétractée P_{R}. Lorsque le module d'affichage 21 se trouve en position déployée P_{D}, celui-ci est dans une position verticale, dans laquelle il est placé en vis-à-vis de la glace 12 du dispositif d'éclairage 10. Une telle position déployée P_{D} permet ainsi la visualisation de pictogrammes ou d'images par exemple. Lorsque le module d'affichage 21 se trouve en position rétractée P_{R}, ce dernier se trouve dans une position sensiblement horizontale, dans laquelle il n'est plus visible depuis l'extérieur du véhicule 1. En position rétractée P_{R}, le module d'affichage 21 se trouve alors escamoté à l'intérieur du boîtier 11 du dispositif d'éclairage 10, de manière à ce qu'il ne masque pas le design des guides de lumière 13.

Afin de permettre le passage de la position déployée P_{D} à la position rétractée P_{R}, le système d'affichage 20 comprend un module de motorisation 22, configuré pour entrainer en rotation le module d'affichage 21. Dans cet exemple, le module de motorisation 22 se présente sous la forme d'un électroaimant, apte à évoluer entre un état actif et un état inactif. Le fonctionnement d'un électroaimant étant connu en soi, celui-ci ne sera pas décrit plus en détails dans ce document.

Le module de motorisation 22, fixé au module d'affichage 21 permet d'entrainer celui-ci en rotation entre la position déployée P_{D} et la position rétractée P_{R} suivant un axe de rotation A situé dans cet exemple sur une bordure du module d'affichage 21. En effet, comme représenté sur la figure 3, l'axe de rotation A est de préférence aménagé de manière à correspondre à la bordure horizontale supérieure du module d'affichage 21. Aussi l'axe de rotation A est colinéaire à l'axe Y du repère orthogonal (X, Y, Z) permettant par exemple le passage d'une position verticale et une position sensiblement horizontale.

Le système d'affichage 20 comprend en outre un module de projection 23, configuré pour projeter une image, un pictogramme et/ou une vidéo sur le module d'affichage 21. Un tel module de projection 23 est de préférence similaire à un projecteur utilisé dans un véhicule 1 comprenant un écran d'affichage dans un dispositif d'éclairage 10 arrière. A ce titre, un tel module de projection 23 ne sera pas décrit plus en détails dans ce document.

Afin de permettre son fonctionnement, le véhicule 1 comprend un module de commande 30 relié électroniquement au système d'affichage 20. Un tel module de commande 30, par exemple le calculateur principal du véhicule 1, est configuré pour commander un état actif du module de motorisation 22 lorsque le véhicule 1 est allumé et un état inactif du module de motorisation 22 lorsque le véhicule 1 est éteint.

Ainsi lorsque le véhicule 1 est allumé, le module de commande 30 est configuré pour commander un état actif du module de motorisation 22 et ainsi placer le module d'affichage 21 en position déployée P_{D}, dans cet exemple à la verticale. De même lorsque le véhicule 1 est éteint (ou endormi), le module de commande 30 est configuré pour commander un état inactif du module de motorisation 22 et ainsi placer le module d'affichage 21 en position rétractée P_{R} par exemple sensiblement à l'horizontale.

Le système d'affichage 20 selon l'invention permet avantageusement d'escamoter le module d'affichage 21 dans le boîtier 11 du dispositif d'éclairage 10, permettant ainsi au module d'affichage 21 de ne pas être positionné devant les guides de lumières 13 lorsque le véhicule 1 est éteint ou endormi, c'est-à-dire lorsque le module d'affichage 21 n'est pas utile. Un tel système d'affichage 20 permet ainsi avantageusement de ne pas masquer le style et le design des dispositifs d'éclairage du véhicule lorsque l'écran d'affichage n'est pas utile.

## Revendications

1. Dispositif (10) d'éclairage et/ou de signalisation lumineuse pour véhicule (1), notamment pour véhicule (1) automobile, ledit dispositif d'éclairage (10) comprenant une pluralité de guides de lumière (13) et un système d'affichage (20) intégrés à l'intérieur d'un boîtier (11) fermé par une glace (12), ledit système d'affichage (20) comportant un module d'affichage (21), configuré pour permettre une diffusion de la lumière de manière orthotrope, **caractérisé en ce que** ledit module d'affichage (21) est configuré pour évoluer entre une position déployée (P_{D}) dans le boîtier (11) et une position rétractée (P_{R}) dans le boîtier (11), et **en ce que** le dit dispositif comprend un module de motorisation (22), configuré pour entrainer en rotation, autour d'un axe de rotation (A), le module d'affichage (21) entre ladite position déployée (P_{D}) et ladite position rétractée (P_{R}), le système d'affichage (20) présentant un état actif et un état inactif, le module de motorisation (22) est configuré pour placer le module d'affichage (21) en position déployée (P_{D}) lorsque le système d'affichage (20) est dans ledit état actif, et le module de motorisation (22) est configuré pour placer le module d'affichage (21) en position rétractée (P_{R}) lorsque le système d'affichage (20) est dans ledit état inactif..

2. Dispositif (10) selon la revendication précédente, dans lequel ledit module de motorisation (22) comprend un électroaimant.

3. Dispositif (10) selon l'une des revendications précédentes, dans lequel le module d'affichage (21) comprenant une première bordure, ledit axe de rotation (A) est aménagé de façon à correspondre à ladite première bordure, de manière à escamoter ledit module d'affichage (21) en position rétractée (P_{R}).

4. Dispositif (10) selon l'une des revendications précédentes, dans lequel le module d'affichage (20) permet d'afficher au moins un pictogramme et/ou au moins une image et/ou au moins une vidéo.

5. Dispositif (10) selon la revendication 4, comprenant un module de projection (23), configuré pour projeter ledit au moins un pictogramme et/ou ladite au moins une image et/ou ladite au moins une vidéo sur le module d'affichage (21), uniquement lorsque ledit module d'affichage (21) est en position déployée (P_{D}).

6. Véhicule (1) automobile comprenant un dispositif (10) d'éclairage et/ou de signalisation lumineuse selon l'une des revendications 1 à 5, dans lequel, le véhicule (1) comprend un module de commande (30) et présente une configuration allumée et une configuration éteinte et/ou endormie, et est tel que ledit module de commande (30) est configuré pour placer le système d'affichage (20) dans ledit état actif, de manière à placer le module d'affichage (21) en position déployée (P_{D}), uniquement lorsque le véhicule (1) est dans ladite configuration allumée.

7. Véhicule automobile comprenant un dispositif (10) d'éclairage et/ou de signalisation lumineuse selon l'une des revendications 1 à 5, dans lequel, le véhicule (1) comprend un module de commande (30) et présente une configuration allumée et une configuration éteinte et/ou et est tel que le module de commande (30) est configuré pour placer le système d'affichage (20) dans ledit état inactif, de manière à placer le module d'affichage (21) en position rétractée (P_{R}), uniquement lorsque le véhicule (1) est dans ladite configuration éteinte et/ou endormie.

## Patentansprüche

1. Vorrichtung (10) zur Beleuchtung und/oder Lichtsignalisierung für ein Fahrzeug (1), insbesondere für ein Kraftfahrzeug (1), wobei die Beleuchtungsvorrichtung (10) mehrere Lichtleiter (13) und eine Systemanzeige umfasst ( 20), das in einem durch ein Glas (12) verschlossenen Gehäuse (11) integriert ist, wobei das Anzeigesystem (20) ein Anzeigemodul (21) umfasst, das so konfiguriert ist, dass es eine orthotrope Lichtstreuung ermöglicht, **dadurch gekennzeichnet, dass** das Anzeigemodul (21) konfiguriert ist um sich zwischen einer ausgefahrenen Position (PD) im Gehäuse (11) und einer eingefahrenen Position (PR) im Gehäuse (11) zu bewegen, und dass die Vorrichtung ein Motorisierungsmodul (22) umfasst, das so konfiguriert ist, dass es sich um eine Achse dreht Drehung (A) des Anzeigemoduls (21) zwischen der ausgefahrenen Position (PD) und der eingefahrenen Position (PR),
wobei das Anzeigesystem (20) einen aktiven Zustand und einen inaktiven Zustand aufweist, wobei das Motorisierungsmodul (22) so konfiguriert ist, dass es das Anzeigemodul (21) in die Einsatzposition (PD) bringt, wenn sich das Anzeigesystem (20) in der aktiven Position befindet Staat, und
das Motorisierungsmodul (22) so konfiguriert ist, dass es das Anzeigemodul (21) in die eingefahrene Position (PR) bringt, wenn sich das Anzeigesystem (20) in dem inaktiven Zustand befindet.

2. Vorrichtung (10) nach dem vorhergehenden Anspruch, wobei das Motormodul (22) einen Elektromagneten umfasst.

3. Vorrichtung (10) nach einem der vorhergehenden Ansprüche, wobei das Anzeigemodul (21) einen ersten Rand umfasst, wobei die Drehachse (A) so angeordnet ist, dass sie mit dem ersten Rand korrespondiert, um so das Display einzuziehen Modul (21) in die eingefahrene Position (PR) bringen.

4. Vorrichtung (10) nach einem der vorhergehenden Ansprüche, wobei das Anzeigemodul (20) die Anzeige mindestens eines Piktogramms und/oder mindestens eines Bildes und/oder mindestens eines Videos ermöglicht.

5. Vorrichtung (10) nach Anspruch 4, umfassend ein Projektionsmodul (23), das dazu konfiguriert ist, das mindestens eine Piktogramm und/oder das mindestens eine Bild und/oder das mindestens eine Video auf das Anzeigemodul (21) zu projizieren., nur wenn sich das Anzeigemodul (21) in der Einsatzposition (PD) befindet.

6. Kraftfahrzeug (1) mit einer Beleuchtungs- und/oder Lichtsignaleinrichtung (10) nach einem der Ansprüche 1 bis 5, bei dem das Fahrzeug (1) ein Steuermodul (30) umfasst und eine Ein-Konfiguration und eine aufweist Die Konfiguration erfolgt in einer ausgeschalteten und/oder schlafenden Konfiguration und ist derart, dass das Steuermodul (30) so konfiguriert ist, dass es das Anzeigesystem (20) in den aktiven Zustand versetzt, um so das Anzeigemodul (21) nur in die Einsatzposition (PD) zu versetzen wenn sich das Fahrzeug (1) in der eingeschalteten Konfiguration befindet.

7. Kraftfahrzeug mit einer Beleuchtungs- und/oder Lichtsignaleinrichtung (10) nach einem der Ansprüche 1 bis 5, bei dem das Fahrzeug (1) ein Steuermodul (30) umfasst und eine Ein-Konfiguration und eine Aus-Konfiguration aufweist und/ oder und ist derart, dass das Steuermodul (30) so konfiguriert ist, dass es das Anzeigesystem (20) nur dann in den inaktiven Zustand versetzt, um das Anzeigemodul (21) in die eingefahrene Position (PR) zu versetzen, wenn das Fahrzeug (1) befindet sich in der besagten Aus- und/oder Ruhezustandskonfiguration.

## Claims

1. Device (10) for lighting and/or light signaling for a vehicle (1), in particular for a motor vehicle (1), said lighting device (10) comprising a plurality of light guides (13) and a system display (20) integrated inside a housing (11) closed by a glass (12), said display system (20) comprising a display module (21), configured to allow diffusion of light orthotropically, **characterized in that** said display module (21) is configured to move between an deployed position (PD) in the housing (11) and a retracted position (PR) in the housing (11), and **in that** said device comprises a motorization module (22), configured to rotate, around an axis of rotation (A), the display module (21) between said deployed position (PD) and said position retracted (PR),
the display system (20) having an active state and an inactive state, the motorization module (22) is configured to place the display module (21) in the deployed position (PD) when the display system (20) ) is in said active state, and
the motorization module (22) is configured to place the display module (21) in the retracted position (PR) when the display system (20) is in said inactive state.

2. Device (10) according to the preceding claim, wherein said motor module (22) comprises an electromagnet.

3. Device (10) according to one of the preceding claims, wherein the display module (21) comprising a first border, said axis of rotation (A) is arranged so as to correspond to said first border, so as to retract said display module (21) into the retracted position (PR).

4. Device (10) according to one of the preceding claims, wherein the display module (20) makes it possible to display at least one pictogram and/or at least one image and/or at least one video.

5. Device (10) according to claim 4, comprising a projection module (23), configured to project said at least one pictogram and/or said at least one image and/or said at least one video onto the display module (21), only when said display module (21) is in the deployed position (PD).

6. Motor vehicle (1) comprising a lighting and/or light signaling device (10) according to one of claims 1 to 5, in which, the vehicle (1) comprises a control module (30) and has an on configuration and an off and/or asleep configuration and is such that said control module (30) is configured to place the display system (20) in said active state, so as to place the display module ( 21) in the deployed position (PD), only when the vehicle (1) is in said switched on configuration.

7. Motor vehicle comprising a lighting and/or light signaling device (10) according to one of claims 1 to 5, in which the vehicle (1) comprises a control module (30) and has an on configuration and an off configuration and/or and is such that the control module (30) is configured to place the display system (20) in said inactive state, so as to place the display module (21) in the retracted position (PR), only when the vehicle (1) is in said off and/or asleep configuration.
